(19) Europäisches Patentamt
European Patent Office
Office européen des brevets

(11) **EP 3 446 014 B1**

(12) **EUROPÄISCHE PATENTSCHRIFT**

(45) Veröffentlichungstag und Bekanntmachung des Hinweises auf die Patenterteilung:
**09.09.2020   Patentblatt 2020/37**

(21) Anmeldenummer: **17710317.3**

(22) Anmeldetag: **16.03.2017**

(51) Int Cl.:
*F16K 27/02* (2006.01)    *F16K 31/00* (2006.01)
*F16K 31/08* (2006.01)    *F16K 31/10* (2006.01)

(86) Internationale Anmeldenummer:
**PCT/EP2017/056267**

(87) Internationale Veröffentlichungsnummer:
**WO 2017/182202 (26.10.2017 Gazette 2017/43)**

(54) **SCHNELLES, PIEZOELEKTRISCH ANGESTEUERTES HYDRAULIKVENTIL**

ACTUATING DEVICE FOR A CONTROL PISTON OF A HYDRAULIC VALVE

DISPOSITIF D'ACTIONNEMENT POUR UN PISTON DE COMMANDE D'UNE SOUPAPE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2016   EP 16165928**

(43) Veröffentlichungstag der Anmeldung:
**27.02.2019   Patentblatt 2019/09**

(73) Patentinhaber: **Primetals Technologies Austria GmbH**
**4031 Linz (AT)**

(72) Erfinder:
• **MIKOTA, Gudrun**
  **4210 Gallneukirchen (AT)**
• **MIKOTA, Josef**
  **4210 Gallneukirchen (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
EP-A2- 1 229 264        WO-A1-99/58840
CN-A- 102 192 135       DE-C1- 4 407 962
DE-U1- 8 801 009        US-A- 6 062 532
US-A1- 2009 311 116     US-A1- 2013 068 200

• MATTEN N ET AL: "STETIGWIRKENDES WEGEVENTIL MIT PIEZOAKTUATORISCHEM STELLELEMENT", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 38, 1. Juni 1994 (1994-06-01), XP000195279, ISSN: 0341-2660
• HERAKOVIC N: "PIEZOAKTORBETATIGUNG FUR EIN EINSTUFIGES HOCHDYNAMISCHES SERVOVENTIL", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 39, Nr. 8, 1. August 1995 (1995-08-01), Seiten 601-605, XP000515989, ISSN: 0341-2660 in der Anmeldung erwähnt
• WENNMACHER G ET AL: "PROTOTYP EINES DYNAMISCHEN SCHNELLSCHALTVENTILES MIT PIEZOELEKTRISCHER ANSTEUERUNG", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 37, Nr. 10, 1. Januar 1993 (1993-01-01), Seiten 794-797, XP000195248, ISSN: 0341-2660

EP 3 446 014 B1

**Beschreibung**

Gebiet der Technik

Die vorliegende Erfindung betrifft das technische Gebiet der Hydraulik. In der Hydraulik werden Hydraulikventile vielfältig eingesetzt, z.B. zur Steuerung oder Regelung von hydraulischen Antrieben, wie linear sich bewegenden Hydraulikzylindern oder rotierenden Hydraulikmotoren, oder in der sog. Sekundärkühlung einer Stranggießmaschine zum Öffnen, Schließen bzw. Einstellen von Kühlmittelströmen.

Konkret betrifft die Erfindung ein Hydraulikventil mit einer Betätigungseinrichtung für einen Steuerkolben, wobei das Hydraulikventil

- ein Gehäuse;
- den Steuerkolben mit einer Querschnittsfläche, wobei der Steuerkolben im Gehäuse in axialer Richtung verschiebbar ist und durch das Verschieben des Steuerkolbens ein Durchfluss einer Druckflüssigkeit einstellbar ist; und
- zumindest eine Betätigungseinrichtung zum Verschieben des Steuerkolbens umfasst, wobei die Betätigungseinrichtung einen piezoelektrischen Aktuator und einen im Betrieb mit der Druckflüssigkeit gefüllten Druckraum aufweist,
dadurch gekennzeichnet, dass
die Betätigungseinrichtung eine biegesteife Metallplatte aufweist, wobei ein äußerer Bereich der Metallplatte am Gehäuse ortsfest festgelegt ist und der piezoelektrische Aktuator einen zentralen Bereich der Metallplatte durchbiegen kann; und wobei
- der Druckraum von dem Gehäuse, der Metallplatte und dem Steuerkolben begrenzt wird,
- die Metallplatte den Druckraum abdichtet und der Druckraum den Steuerkolben beaufschlagt, und
- eine Fläche der Metallplatte über dem Druckraum größer ist als die Querschnittsfläche des Steuerkolbens;

wobei das Hydraulikventil zwei Betätigungseinrichtungen aufweist, sodass die beiden Enden des Steuerkolbens jeweils von einer Betätigungseinrichtung betätigt werden.

Durch die Betätigungseinrichtung wird der Steuerkolben, der eine Querschnittsfläche $A_K$ aufweist, in axialer Richtung im Gehäuse verschoben. Dadurch wird der Durchfluss einer Druckflüssigkeit (bspw. Hydrauliköl, Kühlmittel oder Wasser) durch das Hydraulikventil geöffnet oder geschlossen oder der Durchfluss bzw. der Druck der Druckflüssigkeit auf einen bestimmten Wert eingestellt. Einerseits kann durch das Betätigen der Betätigungseinrichtung ein hydraulischer Antrieb ein- oder ausgeschaltet werden, oder auf eine - mit dem Durchfluss der Druckflüssigkeit durch das Hydraulikventil korrespondierende - Geschwindigkeit eingestellt werden. Andererseits kann über den Durchfluss der Druckflüssigkeit durch das Hydraulikventil die Kühlung, z.B. in einem Walzwerk oder in der Sekundärkühlung einer Stranggießmaschine, gezielt ein- oder ausgeschaltet werden, oder die Kühlleistung, der Volumenstrom oder der Druck, der Druckflüssigkeit auf einen bestimmten Sollwert eingestellt werden. Die Einstellung erfolgt dabei entweder unstetig bzw. schaltend, z.B. durch periodisches Ein- und Ausschalten des Volumenstroms, oder stetig, wobei die Betätigungseinrichtung den Steuerkolben des Hydraulikventils auf eine vorbestimmte Position verfährt.

Stand der Technik

Im Stand der Technik sind bereits unterschiedlichste Hydraulikventile mit Betätigungseinrichtungen bekannt. Durch die Betätigungseinrichtungen wird der Steuerkolben entweder direkt oder indirekt (bzw. vorgesteuert) betätigt.

Besonders schnelle stetige Hydraulikventile werden nach dem Stand der Technik meist als sog. ein- oder mehrstufige Servoventile ausgeführt. In diesem Fall wird der Steuerkolben durch mindestens eine als Servo-Vorstufe ausgebildete Betätigungseinrichtung indirekt (bzw. vorgesteuert) betätigt. In schnellen unstetigen Hydraulikventilen (kurz Schaltventile genannt) wird der Steuerkolben durch eine Betätigungseinrichtung mit zumindest einem Proportional- oder Regelmagneten direkt betätigt.

Servoventile sind aufgrund der hohen technischen Komplexität der Servo-Vorstufe sehr kompliziert. Außerdem sind sie schmutzempfindlich, wenig robust und teuer. Schließlich ist die Steuerung oder Regelung eines Servoventils aufgrund der ausgeprägten Nichtlinearitäten der Servo-Vorstufe (vor allem durch das Düsen-Prallplattenprinzip) schwierig und regelungstechnisch aufwändig.

Verglichen mit Servoventilen ist die direkte Ansteuerung von stetigen Hydraulikventilen durch Betätigungseinrichtungen mit Proportional- oder Regelmagneten (diese Hydraulikventile werden kurz Proportional- oder Regelventile genannt) oder von unstetigen Schaltventilen mit Magneten deutlich einfacher, weniger schmutzempfindlich, robuster und billiger. Nachteilig daran ist jedoch, dass damit Hydraulikventile mit einem Durchfluss von 50 l/min bei einem Druckabfall von 5 bar und einer Schaltzeit < 10ms schwer realisierbar sind.

Außerdem sind im Stand der Technik Hydraulikventile bekannt, die eine Betätigungseinrichtung mit einem piezoelektrischen Aktuator umfassen. Obwohl piezoelektrische Aktuatoren (z.B. Piezo-Keramiken) schnell reagieren und hohe Kräfte aufbringen können, ist daran nachteilig, dass diese nur geringste Hübe bzw. Auslenkungen realisieren können. Auch die Verwendung von sogenannten Piezostacks, z.B. durch die Anordnung von mehreren piezoelektrischer Aktuatoren übereinander zur Realisierung größerer Hübe bzw. Auslenkungen, führt bei der praktischen Anwendung zu Problemen, zumal selbst diese Hübe für einen Steuerkolben im Normalfall nicht ausreichend sind.

Aus der Veröffentlichung
Alan Hitchcox "Piezo actuators: The future of servovalves?", hydraulics & pneumatics, 2005 (siehe http://hydraulicspneumatics.com/200/TechZone/HydraulicVal     ves/Article/False/12852/TechZone-HydraulicValves)
ist ein Hydraulikventil mit einem piezoelektrischen Aktuator zur Ansteuerung eines Steuerkolbens bekannt. Wie der äußerst geringe Weg des piezoelektrischen Aktuators erhöht werden kann, geht aus der Veröffentlichung nicht hervor.

Auch aus der Veröffentlichung
Jörg Edler et al. "Investigation of a Servo Valve with a Piezoelectric Pilot Stage", Fluid Power 2015
ist ein Servoventil mit einem piezoelektrischen Aktuator bekannt. Bedingt durch die Servo-Vorstufe ist das Servoventil sehr komplex, schmutzempfindlich und teuer.

Aus der WO 99/58840 A1 ist ein Hydraulikventil mit einer Betätigungseinrichtung 5 bekannt, wobei das Hydraulikventil ein Gehäuse 1, einen axial verschiebbaren Steuerkolben 14 und eine Betätigungseinrichtung 5 umfasst. Die Betätigungseinrichtung 5 weist einen piezoelektrischen Aktuator 12, einen Druckkolben 11 mit einem Rückstellelement 13 und einer Dichtung 18 sowie eine mit einem Fluid 6 gefüllte Hydraulikkammer 2 auf. Durch den piezoelektrischen Aktuator 12 wird der Druckkolben 11 in axialer Richtung verschoben, wobei dieser durch eine separate Dichtung 18 gegenüber dem Gehäuse 1 abgedichtet wird. Durch das Rückstellelement 13 wird der Druckkolben wieder in seine Ausgangslage zurückgebracht. Die Querschnittsfläche des Druckkolbens 11 ist größer als die Querschnittsfläche des Steuerkolbens 14, sodass der Steuerkolben 14 weiter verschoben wird als sich der piezoelektrische Aktuator 12 ausdehnt. Nachteilig an dieser Lösung ist, dass der Druckkolben 11 schwer ist und dieser über eine separate Dichtung 18 abgedichtet werden muss. Da die Dichtung aufgrund der Reibung zwischen dem sich bewegenden Druckkolben und dem Gehäuse ein dissipatives Element ist, wirkt sich dies negativ auf die Dynamik des Hydraulikventils aus. Außerdem sind die Massen des Druckkolbens 11 und des Steuerkolbens 14 hoch, was ebenfalls die Schnelligkeit des Hydraulikventils begrenzt. Die Dichtung 18 ist zudem einen Verschleiß unterworfen, was die Lebensdauer des Hydraulikventils herabsetzt. Wie die max. Dynamik des Hydraulikventils erhöht und dessen Zuverlässigkeit verbessert werden kann, geht aus der Schrift nicht hervor.

Aus der DE 4407962 C1 ist eine Betätigungsvorrichtung für ein axial verschiebbares Abtriebselement 5 mit einem elektro- oder magnetostriktivem Aktuator 1 bekannt. Der Hub des Aktuators 1 wird über einen Stellwegvergrößerer 2 vergrößert, wobei der Aktuator 1 eine zwischen zwei Gehäuseteile 10.1, 10.2 eingeklemmte Metallmembran durchbiegen kann. Die Metallmembran wirkt auf einen mit einer inkompressiblen Substanz gefüllten Druckraum 4 ein, der von dem Gehäuse 10.2 und dem Abtriebselement 5 begrenzt sowie von der Metallmembran abgedichtet wird. Die Querschnittsfläche der Metallmembran über dem Druckraum 4 ist größer als die Querschnittsfläche des Abtriebselements 5.

Aus der Veröffentlichung
HERAKOVIC N: "PIEZOAKTORBETATIGUNG FÜR EIN EINSTUFIGES HOCHDYNAMISCHES SERVOVENTIL", O&P - OELHYDRAULIK UND PNEUMATIK, Bd. 39, Nr. 8, 1. August 1995, Seiten 601-605
ist ein hydraulischer Wegübersetzer für ein piezoelektrisch betätigtes Hydraulikventil bekannt. Da der Wegübersetzer eine Membran einsetzt, muss der max. Betriebsdruck des Hydraulikventils auf ca. 50 bar begrenzt werden. Somit ist aber diese Lösung für Hydraulikventile im Mittel- oder Hochdruckbereich nicht geeignet.

Auch aus der US 6, 062, 532 ist ein Hydraulikventil bekannt, das einen hydraulischen Wegübersetzer mit einer Membran einsetzt. Auch diese Lösung ist aufgrund der Membran nicht für Hydraulikventile im Mittel- oder Hochdruckbereich geeignet.

Aus der DE 8801009 U1 ist ein Hydraulikventil mit einer Membran für den Einsatz im Sanitärbereich bekannt. Da der max. Betriebsdruck im Sanitärbereich nur wenige bar beträgt (siehe http://www.ikz.de/ikz-praxisarchiv/p0405/040512.php), ist das Hydraulikventil nicht für den Mittel- oder Hochdruckbereich geeignet. Außerdem kann das Hydraulikventil keine schnellen Schaltzeiten ≤ 10 ms realisieren.

Somit stößt man mit den Hydraulikventilen nach dem Stand der Technik an Grenzen. Da für gewisse Anwendungen (z.B. zur Ansteuerung eines Hydraulikventils zur Unterdrückung bzw. Kompensation von Chatterschwingungen in einem Walzwerk) jedoch nur schnelle Mittel- oder Hochdruck-Hydraulikventile mit einem Durchfluss ≥ 50 l/min bei einem Druckabfall von 5 bar und einer Schaltzeit ≤ 2 ms eingesetzt werden können, müssen derzeit noch immer Servoventile mit einer Düsen-Prallplatten Betätigungseinrichtung verwendet werden und viele Nachteile bzgl. Preis, Schmutzempfindlichkeit und Nichtlinearität der Ansteuerung in Kauf genommen werden.

Zusammenfassend gibt es also einen Bedarf nach einem einfachen Hydraulikventil, das für einen Einsatz im Mittel- oder Hochdruckbereich geeignet ist, schnell (Schaltzeit ≤ 2 ms) reagieren kann, aber die vorgenannten Nachteile bzgl. Preis, Robustheit, Schmutzempfindlichkeit und Nichtlinearität der Ansteuerung nicht aufweist.

Zusammenfassung der Erfindung

Die Aufgabe der Erfindung ist es, die Nachteile des Stands der Technik zu überwinden und ein schnelles Hydraulikventil für den Mittel- (Drücke zwischen 100 bis 200 bar) oder Hochdruckbereich (Drücke über 200 bis ca. 500 bar) mit einem Durchfluss ≥ 50 l/min bei einem Druckabfall von ≤ 5 bar zu schaffen. Das Hydraulikventil soll eine Schaltzeit ≤ 2 ms aufweisen, sodass der Steuerkolben des Hydraulikventils innerhalb der Schaltzeit von einer ersten Endlage (z.B. einer geschlossenen Stellung) in eine zweite Endlage (z.B. einer vollständig geöffneten Stellung) verschoben werden kann. Die Ansteuerung des Hydraulikventils soll sich im Vergleich mit Servoventilen wesentlich linearer verhalten. Außerdem soll das Hydraulikventil im Vergleich mit dem Stand der Technik einfacher, günstiger, robuster und schmutzunempfindlicher sein.

Diese Aufgabe wird durch ein Hydraulikventil der eingangs genannten Art dadurch gelöst, dass die Betätigungseinrichtung des Hydraulikventils eine biegesteife Metallplatte aufweist, wobei ein äußerer Bereich der Metallplatte am Gehäuse ortsfest festgelegt ist und der piezoelektrische Aktuator einen zentralen Bereich der Metallplatte durchbiegen kann; und wobei der Druckraum von dem Gehäuse, der Metallplatte und dem Steuerkolben begrenzt wird, die Metallplatte den Druckraum abdichtet und der Druckraum den Steuerkolben beaufschlagt, und eine Fläche $A_P$ der Metallplatte über dem Druckraum größer ist als die Querschnittsfläche $A_K$ des Steuerkolbens, wobei das Hydraulikventil zwei Betätigungseinrichtungen umfasst, sodass die beiden Enden des Steuerkolbens jeweils von einer Betätigungseinrichtung betätigt werden.

Unter die Erfindung sollen nur Hydraulikventile mit einem Durchfluss größer oder gleich 50 l/min bei einem Druckabfall von kleiner oder gleich 5 bar und einer Schaltzeit kleiner oder gleich 2 ms fallen. Somit fallen Hydraulikventile mit einem Durchfluss < 50 l/min (z.B. Einspritzventile zum Einspritzen eines Brennstoffs in einen Verbrennungsmotor) nicht unter den Schutzbereich der Erfindung, auch wenn diese eine Schaltzeit ≤ 2 ms aufweisen.

Das erfindungsgemäße Hydraulikventil mit der Betätigungseinrichtung löst die Aufgabe dadurch, dass ein piezoelektrischer Aktuator (kurz Piezoelement oder Piezo) den zentralen Bereich einer biegesteifen Metallplatte durchbiegen kann. Dazu wird der piezoelektrische Aktuator, der vorzugsweise in-line mit der Symmetrieachse (bei einer kreisförmigen Metallplatte somit kollinear mit dem Mittelpunkt) der Metallplatte angeordnet ist, bestromt, sodass sich der Aktuator in axialer Richtung ausdehnt. Die Metallplatte trennt den Raum, in dem der Piezo angeordnet ist, von dem mit der Druckflüssigkeit (z.B. ein Hydraulikfluid, ein Kühlmittel oder Wasser) gefüllten Druckraum und dichtet den Druckraum fluiddicht ab. Der Raum, in dem das Piezoelement selbst angeordnet ist, kann entweder mit Druckflüssigkeit gefüllt ("nass" genannt) oder "trocken" sein. Durch das Durchbiegen der biegesteifen Metallplatte werden Biegespannungen im elastischen Bereich der Metallplatte hervorgerufen und andererseits wird im Druckraum ein Druck p aufgebaut. Da der Druckraum den Steuerkolben beaufschlägt, wird der Steuerkolben durch die Kraft $F = p \cdot A_K$ verschoben, wobei $A_K$ die Querschnittsfläche des Steuerkolbens ist. Um den Steuerkolben weiter als die axiale Ausdehnung des Piezoelements zu verschieben, ist die Fläche $A_P$ der Metallplatte über dem Druckraum größer als die Querschnittsfläche $A_K$ des Steuerkolbens. Somit wird der Steuerkolben aufgrund der für den Druckraum geltenden Volumenkonstanz quasi mit einer "hydraulischen Wegverstärkung" verschoben. Der Faktor für diese hydraulische Wegverstärkung entspricht vereinfacht dem Verhältnis zwischen der Fläche $A_P$ der Metallplatte über dem Druckraum und der Querschnittsfläche $A_K$ des Steuerkolbens. Bei einem Flächenverhältnis von z.B. 64 wird der Steuerkolben des Ventils etwa 64 mal so weit verschoben als sich das Piezoelement in axialer Richtung ausdehnt, d.h. es kommt eine "hydraulische Wegverstärkung" von 64 zur Anwendung.

Zur Abstützung der Metallplatte ist der äußere Bereich der Metallplatte am Gehäuse ortsfest festgelegt. Somit sind am äußeren Bereich der Metallplatte zumindest die drei Verschiebefreiheitsgrade (in einem Zylinderkoordinatensystem sind das die radiale, die tangentiale und die axiale Verschiebung) gesperrt. Bei einer Einspannung der Metallplatte sind zusätzlich die Verdrehungsfreiheitsgrade gesperrt. Bevorzugt ist, wenn der gesamte Umfang des äußeren Bereichs der Metallplatte ortsfest festgelegt ist und sich der Bereich innerhalb des äußeren Bereichs der Metallplatte frei durchbiegen kann.

Bei der biegesteifen Metallplatte handelt es im Sinne der Technischen Mechanik um eine biegesteife metallische Platte, d.h. um ein "flaches" plattenförmiges mechanisches Element, das eine signifikant hohe (d.h. nicht zu vernachlässigende) Biegesteifigkeit aufweist. Wird eine Platte gebogen, stellt sich ein Biegespannungszustand ein. Die Biegespannungen in der Platte sind bekanntlich nicht über die Dicke der Platte konstant, da es unter anderem eine Zug-, eine Druck- und eine neutrale Faser gibt. Im Gegensatz dazu ist die Biegesteifigkeit einer Membran vernachlässigbar klein. Eine Membran kann keine Biegebeanspruchung aufnehmen und die Spannungen werden über die Dicke der Membran als konstant angenommen. Die Technische Mechanik spricht in diesem Fall von einem Membranspannungszustand. Bei der Metallplatte gemäß der Erfindung handelt es sich aber gerade um keine Membran, da diese die während des Betriebs im Druckraum auftretenden hohen hydraulischen Drücke nicht dauerhaft aushalten würde.

Das erfindungsgemäße Hydraulikventil weist nur wenige bewegte Teile auf und ist daher einfach und kostengünstig. Da das Hydraulikventil bewusst enge Spalte vermeidet, ist es auch schmutzunempfindlich und robust. Durch die Verwendung einer Metallplatte anstelle einer Membran kann das Hydraulikventil uneingeschränkt im Mittel- oder Hochdruckbereich verwendet werden. Außerdem kann der Steuerkolben einfach und leicht ausgebildet werden, was niedrige Schaltzeiten ≤ 2 ms und eine hohe Dynamik ermöglicht. Ein separater Druckkolben wie in der WO 99/58840 wird nicht benötigt. Außerdem reduziert eine druckdichte Festlegung (z.B. eine Einspannung) der Metallplatte oder eine zusätzliche Dichtung zwischen dem äußeren Bereich der Metallplatte und dem Gehäuse zur Abdichtung des Druckraums die Dynamik des Hydraulikventils nicht. Da sich sowohl der piezoelektrische Aktuator als auch die Metallplatte stark linear verhalten, verhält sich das Hydraulikventil wesentlich linearer als vergleichbar schnelle Servoventile.

Vorzugsweise ist die Metallplatte einstückig ausgeführt, da so keine Abdichtung innerhalb der Metallplatte notwendig ist.

Zur Erzielung großer Verschiebungen des Steuerkolbens ist es vorteilhaft, wenn die Fläche der Metallplatte über dem Druckraum $A_P$ mindestens 4-mal, mindestens 16-mal, mindestens 36-mal, oder mindestens 64-mal größer als die Querschnittsfläche des Steuerkolbens $A_K$ ist. Auch noch größere Flächenverhältnisse sind problemlos realisierbar und werden nur durch die max. Kraft des Piezos begrenzt.

Der piezoelektrische Aktuator kann z.B. als ein piezoelektrischer Stack ausgebildet sein, wodurch die Verschiebung des Steuerkolbens weiter erhöht wird.

Insbesondere aus steuerungs- oder regelungstechnischen Gründen ist es vorteilhaft, wenn der piezoelektrische Aktuator ein Wegmesssystem zur Messung einer Ausdehnung des piezoelektrische Aktuators in axialer Richtung x aufweist. Hierbei kann die Wegmessung entweder bereits in das Piezoelement integriert sein oder durch ein externes Wegmesssystem erfolgen.

Günstig ist es, wenn die Metallplatte im zentralen Bereich dicker als im äußeren Bereich ist. Dadurch verhält sich die Metallplatte im äußeren Bereich biegeweicher als im zentralen Bereich, sodass die Kraft für das Durchbiegen der Metallplatte abgesenkt wird. Andererseits sorgt ein dickerer zentraler Bereich dafür, dass die Durchbiegung der Metallplatte durch das Piezoelement über einen weiten Bereich relativ konstant gehalten wird.

Eine lange Lebensdauer der Metallplatte bzw. der Betätigungseinrichtung wird erreicht, wenn die Metallplatte aus Stahl, vorzugsweise Federstahl, besteht.

Bei einer gegebenen Kraft wird eine hohe Durchbiegung erreicht, wenn die Metallplatte rund, vorzugsweise kreisrund, ausgeführt ist.

Die Stellung des Steuerkolbens in den sogenannten Endlagen kann einfach dadurch festgelegt werden, wenn der zentrale Bereich der Metallplatte einen Haltemagneten aufweist. Durch den Haltemagneten - vorzugweise ein Permanentmagnet, aber auch ein Elektromagnet wäre möglich - wird die Stellung eines ferromagnetischen Steuerkolbens in einer Endlage weitgehend unabhängig von Strömungskräften festgelegt. Diese Ausführungsform trägt einerseits zur Energieeinsparung bei, da das Piezoelement nur bei einem Zustandswechsel (z.B. beim Übergang von einer Endlage in eine andere Endlage) bestromt werden muss. Der Steuerkolben verhält sich in den Endlagen somit bistabil. Andererseits kann dadurch auch der Piezo kleiner und kompakter ausgeführt werden, da er nicht ständig bestromt werden muss.

Der Druckraum kann sehr leckagearm bzw. völlig leckagefrei abgedichtet werden, wenn eine fluiddichte Dichtung zwischen dem äußeren Bereich der Metallplatte und dem Gehäuse vorhanden ist. Im Gegensatz zur Abdichtung des Druckkolbens 11 mittels der Dichtung 18 bei der WO 99/58840 A1, bewirkt die Dichtung am äußeren Bereich der Metallplatte keine Reduktion der Dynamik, da der äußere Bereich der Metallplatte im Bereich der Dichtung ortsfest festgelegt ist.

Zum Ausgleich von Leckagen im Druckraum und zum Druckausgleich zwischen dem Druckraum und der Druckversorgung ist es besonders vorteilhaft, wenn eine Leitung, die vorzugsweise eine Blende aufweist, den Druckraum mit einer Druckversorgung (z.B. für einen Steuerdruck $p_S$ oder einen Systemdruck p) verbindet. Vorteilhaft an einer separaten Druckversorgung mit einem Steuerdruck $p_S$ ist, dass der Steuerdruck stabiler als der Systemdruck p ist und der Steuerdruck $p_S$ < als das Maximum des Systemdrucks p ist.

Wie bereits oben angeführt, ist das erfindungsgemäße Hydraulikventil nicht auf die hydraulische Antriebstechnik eingeschränkt. Vielmehr können die Hydraulikventile auch in metallurgischen Anlagen, z.B. Walzwerken, Stranggießanlagen... eingesetzt werden, wobei ein Metall (z.B. ein Stahlstrang mit Brammenformat, oder ein Vor- oder Fertigstreifen) durch Kühldüsen gekühlt wird. Die Einstellung des Durchflusses bzw. des Drucks der Druckflüssigkeit durch eine oder mehrere Kühldüsen kann durch ein Hydraulikventil erfolgen.

Zur Fixierung des Steuerkolbens in einer Endlage ist es zweckmäßig, wenn der Steuerkolben aus Stahl, vorzugsweise aus einem ferromagnetischen Stahl, besteht. Diese Ausführungsform ist insbesondere dann vorteilhaft, wenn der zentrale Bereich der Metallplatte einen Haltemagneten aufweist.

Ein "Ankleben" der Stirnfläche des Steuerkolbens an der Metallplatte kann verhindert werden, wenn die Stirnfläche des Steuerkolbens eine Bombierung aufweist. Auch dadurch wird die Dynamik des Hydraulikventils erhöht.

Eine einfache Konstruktion des Hydraulikventils wird erreicht, wenn das Gehäuse einen Ventilblock und einen Deckel aufweist, wobei der Deckel lösbar mit dem Ventilblock verbunden ist und sich der piezoelektrische Aktuator am Deckel abstützt. Die Metallplatte kann zwischen dem Gehäuse und dem Deckel eingespannt werden. Dadurch wird auch die Wartungsfreundlichkeit des Hydraulikventils verbessert.

Zur Regelung der Position des Steuerkolbens ist es günstig, wenn der Ventilblock ein Wegmesssystem zur Messung einer Position des Steuerkolbens aufweist. Somit kann auf externe Wegmesssysteme außerhalb des Ventilblocks verzichtet werden. Für eine hohe Dynamik ist es vorteilhaft, wenn das Wegmesssystem berührungslos arbeitet.

Eine einfache und effektive Ansteuerung des Hydraulikventils wird erreicht, wenn ein Verstärker ein Steuersignal verstärkt und zumindest einen Aktuator mit dem verstärkten Steuersignal bestromt.

Eine einfache und effektive Ansteuerung des Hydraulikventils mit einem Regler und einem Verstärker wird erreicht, wenn der Regler ein Stellgrößensignal u in Abhängigkeit einer Differenz zwischen einer Soll-Position und einer Ist-Position des Steuerkolbens berechnet, und der Verstärker zumindest einen Aktuator mit dem verstärkten Stellgrößensignal bestromt.

In beiden Fällen wird das Steuer- bzw. Stellgrößensignal durch einen Verstärker verstärkt und so die empfindliche Steuerung/Regelung vom Leistungsteil des Aktuators getrennt.

Insbesondere bei der Regelung kann durch das Bestromen des Piezoelements zudem die zeitliche Ausdehnung des Aktuators gezielt eingestellt werden. Möglich sind hier nicht nur das Aufschalten eines Sprungs, was entsprechend der Dynamik des Piezoelements zu einer raschen axialen Ausdehnung des Piezoelements führt, sondern beliebige Verläufe, wie z.B. rampenförmige, trapezförmige, sinusförmige Verläufe etc.

Erfindungsgemäß weist das Hydraulikventil zwei Betätigungseinrichtungen auf, sodass die beiden Enden des Steuerkolbens jeweils von einer Betätigungseinrichtung betätigt werden. Diese Ausführungsform ist für viele Hydraulikventile, z.B. für ein 3/2 Wege Schalt- oder Stetigventil oder für ein 4/3 Wege Schalt- oder Stetigventil, zweckmäßig, und auch deswegen vorteilhaft, da für die Rückstellung des Steuerkolbens keine mechanische Feder nötig ist. Mechanische Federn erscheinen zwar auf den ersten Blick einfach; sie sind aber einem Verschleiß unterworfen und weisen bei größeren Federwegen ausgeprägte Nichtlinearitäten auf (z.B. Tellerfedern). Durch diese Ausführung kann wiederum der Steuerkolben kleiner und leichter ausgeführt werden, was die Dynamik des Hydraulikventils verbessert.

Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die folgenden Figuren zeigen:

Fig 1 einen Längsschnitt durch ein Hydraulikventil mit einer Betätigungseinrichtung und einer Feder

Fig 2 einen Viertelschnitt durch eine erste Alternative des Hydraulikventils mit einer Betätigungseinrichtung mit einem Haltemagneten

Fig 2a und Fig 2b je eine Darstellung der Funktionsweise der Betätigungseinrichtung des Hydraulikventils

Fig 3 einen Längsschnitt durch ein Hydraulikventil mit zwei Betätigungseinrichtungen

Fig 4 eine schematische Darstellung der Spulen einer Wegmesseinrichtung für den Steuerkolben eines Hydraulikventils

Fig 5 eine Darstellung der Ansteuerung eines piezoelektrischen Aktuators

Fig 6 eine Darstellung der Regelung der axialen Ausdehnung eines piezoelektrischen Aktuators

Fig 7 eine Darstellung der Regelung der Position eines Steuerkolbens eines Hydraulikventils mit zwei Betätigungseinrichtungen

Fig 8 ein Halbschnitt durch ein Hydraulikventil mit zwei Varianten einer Betätigungseinrichtung

Beschreibung der Ausführungsformen

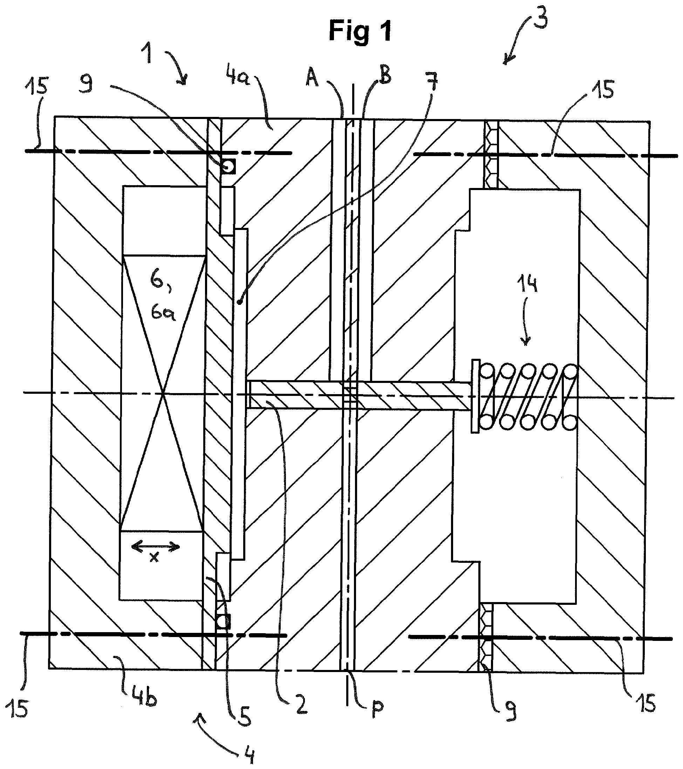

Die Fig 1 zeigt ein 3/2-Wege (die Zahl vor dem Schrägstrich steht für die Anzahl der Anschlüsse und die Zahl hinter dem Schrägstrich für die Anzahl der Stellungen des Hydraulikventils) Hydraulikventil 3 mit einer Betätigungseinrichtung 1, das auf der linken Seite der Figur angeordnet ist. Das Hydraulikventil 3 arbeitet als Schaltventil und weist einen Steuerkolben 2 auf, der in einer Bohrung im Ventilblock 4a des Gehäuses 4 verschiebbar geführt ist. Je nach der Stellung des Steuerkolbens 2 wird der Druckanschluss p des Ventils 3 entweder mit dem Verbraucheranschluss A oder B verbunden. Der Steuerkolben 2 wird einerseits durch die Betätigungseinrichtung 1 und andererseits durch eine Feder 14 beaufschlagt. Die Betätigungseinrichtung 1 weist eine kreisförmige biegesteife Metallplatte 5 aus Federstahl auf, die zwischen dem Ventilblock 4a und dem Deckel 4b des Gehäuses 4 eingespannt ist. Beide Teile des Gehäuses 4 sind durch Schraubenverbindungen 15 lösbar miteinander verbunden, sodass der piezoelektrische Aktuator 6 (kurz Piezo) die Metallplatte 5 oder auch die gesamte Betätigungseinrichtung 1 einfach ausgetauscht werden können. Auf der linken Seite der Metallplatte 5 ist ein als Piezostack 6a ausgeführter Piezo 6 angeordnet, sodass der zentrale Bereich der Metallplatte 5 durch den Piezo durchgebogen werden kann. Da die Metallplatte 5 im äußeren Bereich dünner als im zentralen Bereich ist, wird die benötigte Kraft zum Durchbiegen der Metallplatte niedrig gehalten. Auf der rechten Seite der Metallplatte 5 befindet sich ein Druckraum 7. Durch das Bestromen des piezoelektrischen Aktuators 6 dehnt sich dieser in axialer Richtung x aus und biegt den zentralen Bereich der Metallplatte 5 durch. Da der Druckraum 7 mit einer Druckflüssigkeit (hier Hydrauliköl) gefüllt ist, steigt durch das Durchbiegen der Metallplatte 5, welche eine Biegelinie beschreibt, der Druck p im Druckraum 7 an. Die linke Seite des Druckraums 7 wird von der Metallplatte 5 und einer Dichtung 9, die sich zwischen der Metallplatte 5 und dem Ventilblock 4a befindet, fluiddicht abgedichtet. Die anderen Seiten des Druckraums 7 werden durch den Ventilblock 4a des Gehäuses 4 druckdicht abgedichtet. Da der Druckraum 7 die Stirnfläche des Steuerkolbens 2 beaufschlägt, wird der Steuerkolben 2 mit der Kraft $F = p \cdot A_K$, wobei $A_K$ die Querschnittsfläche des Steuerkolbens ist, in Richtung der Feder 14 verdrängt. Durch das Verschieben des Steuerkolbens 2 wird der Druckanschluss p des Hydraulikventils 3 mit dem Anschluss B verbunden. Nachdem das Bestromen des piezoelektrischen Aktuators 6 beendet wird, wird der Steuerkolben 2 durch die Druckfeder 14 wieder nach links verschoben, sodass der Anschluss p wieder mit dem Anschluss A des Hydraulikventils verbunden ist.

Gemäß der Darstellung von Fig 1 beträgt das Verhältnis zwischen der Fläche $A_P$ der Metallplatte 5 über dem Druckraum 7 zur Querschnittsfläche $A_K$ des Steuerkolbens 2 ca. 225. Durch die erfindungsgemäße Betätigungseinrichtung 1 kann somit eine Längenänderung des piezoelektrischen Aktuators 6 von bspw. 60 $\mu$m auf einfache Art und Weise den Steuerkolben 2 um ca. 10 mm verschieben. Von großem Vorteil ist, dass die "Wegverstärkung" rein hydraulisch funktioniert und die Betätigungseinrichtung 1 bis auf die Metallplatte 5 und den Aktuator 6 keine bewegten Teile aufweist. Daher ist das Hydraulikventil 3 mit der Betätigungseinrichtung 1 sehr einfach, zuverlässig und zudem wenig schmutzempfindlich. Das Bewegen eines Steuerkolbens 2 gegenüber einer Feder 14 ist dem Fachmann aus einer Vielzahl von Ventiltypen bekannt, sodass auf eine detaillierte Erläuterung der rechten Seite des Hydraulikventils 3 von Fig 1 verzichtet werden kann. Die bewegten Massen sind äußerst niedrig, sodass problemlos eine Schaltzeit von < 2 ms erreicht werden kann.

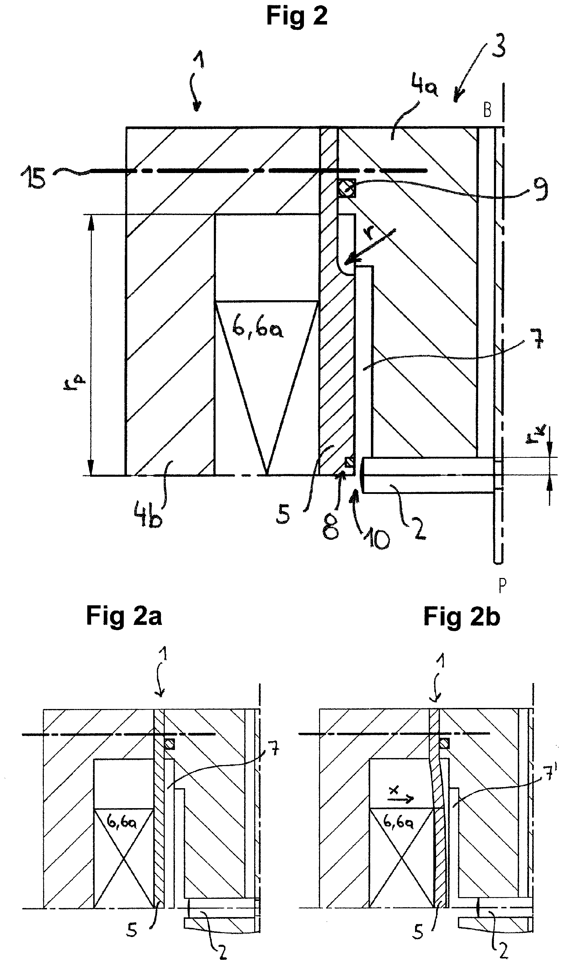

In Fig 2 ist ein Viertelschnitt durch ein Hydraulikventil 3 mit einer weiteren Betätigungseinrichtung 1 dargestellt. Die Ausführungsform der Fig 2 weist zusätzlich zu der Betätigungseinrichtung 1 von Fig 1 einen Steuerkolben 2 mit einer Bombierung 10 der Stirnfläche auf. Damit wird das sogenannte "Ankleben" des Steuerkolbens 2 an der Metallplatte 5 verhindert. Außerdem weist der zentrale Bereich der Metallplatte 5 einen permanentmagnetischen Haltemagneten 8 auf, der den ferromagnetischen Steuerkolben 2 aus Stahl in einer Endlage halten kann. Weiters dargestellt sind der Radius $r_K$ des zylindrischen Steuerkolbens 2 und der Radius $r_P$ der kreisrunden Metallplatte 5 über dem Druckraum 7, wobei gilt

$$A_K = r_K^2 \cdot \pi \quad \text{und} \quad A_P = r_P^2 \cdot \pi.$$

Die Metallplatte 5 weist eine Ausrundung r zwischen dem dickeren und dem dünneren Teil auf, wodurch die Betriebsfestigkeit der Metallplatte 5 erhöht wird.

In den Fig 2a und 2b ist die Funktionsweise des erfindungsgemäßen Hydraulikventils mit der Betätigungseinrichtung 1 vereinfacht dargestellt. In Fig 2a befindet sich der Piezo 6 im Ruhezustand, die Metallplatte 5 ist nicht durchgebogen und auch der Steuerkolben 2 befindet sich in einer Anfangsstellung. Hingegen ist in Fig 2b der Piezo 6 in axialer Richtung x ausgefahren und bewirkt eine Durchbiegung der Metallplatte 5. Die Durchbiegung der Metallplatte bewirkt eine Erhöhung des Drucks p im Druckraum 7', sodass der Steuerkolben 2 durch die Verdrängung nach rechts verschoben wird. Nach kurzer Zeit sind die Druckräume 7 und 7' gleich groß, sodass sich der Steuerkolben 2 in Fig 2b weiter rechts befindet als in Fig 2a.

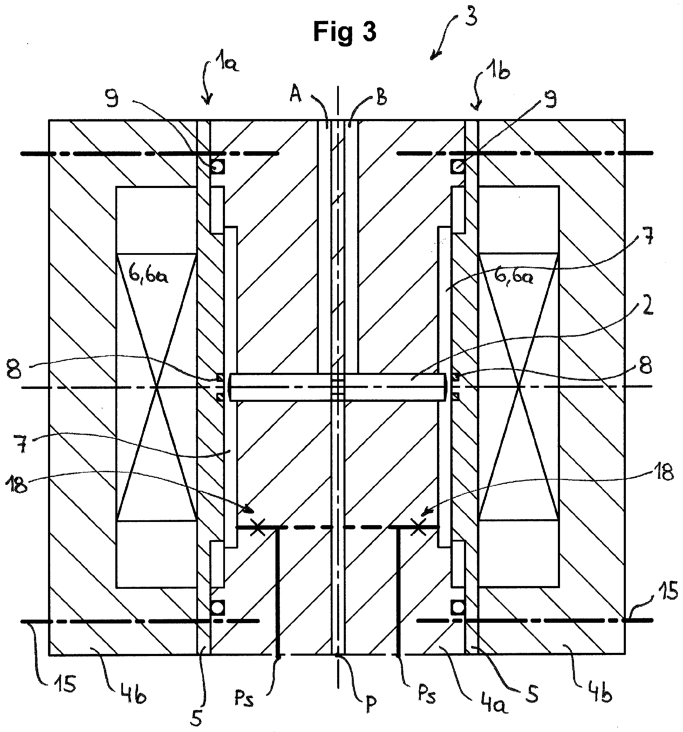

Die Fig 3 zeigt einen schematischen Längsschnitt durch ein nichtstetiges 3/2-Wege Hydraulikventil 3 mit zwei Betätigungseinrichtungen 1a, 1b. Der konstruktive Aufbau der Betätigungseinrichtungen 1a, 1b ist sehr ähnlich zum Aufbau von Fig 2, jedoch wird der Steuerkolben von den beiden Betätigungseinrichtungen beaufschlagt und von den beiden Haltemagneten 8 in den jeweiligen Endlagen gehalten. Somit wird ein äußerst schnelles Schaltventil geschaffen. Um insbesondere im schnellschaltenden Betrieb des Hydraulikventils 3 stets eine vollständige Füllung der Druckräume 7 sicherzustellen, sind die Druckräume 7 über eine Leitung mit einem Steuerdruckanschluss $p_S$ verbunden, der über eine enge Blende bzw. Drossel 18 etwaige Leckagen aus dem Druckraum 7 wieder ausgleicht. Alternativ dazu können - so wie strichliert dargestellt - auch Stichleitungen vom Druckanschluss p zu den Druckräumen 7 führen.

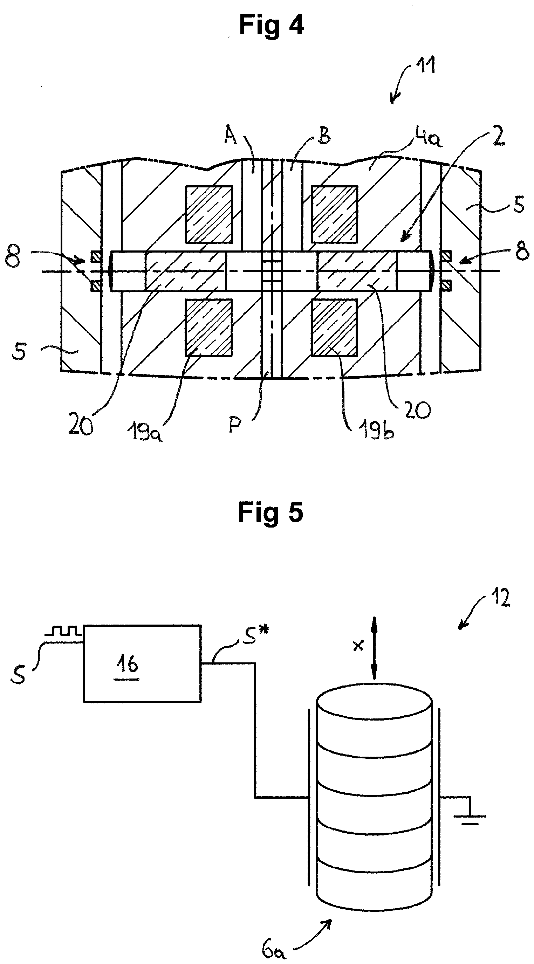

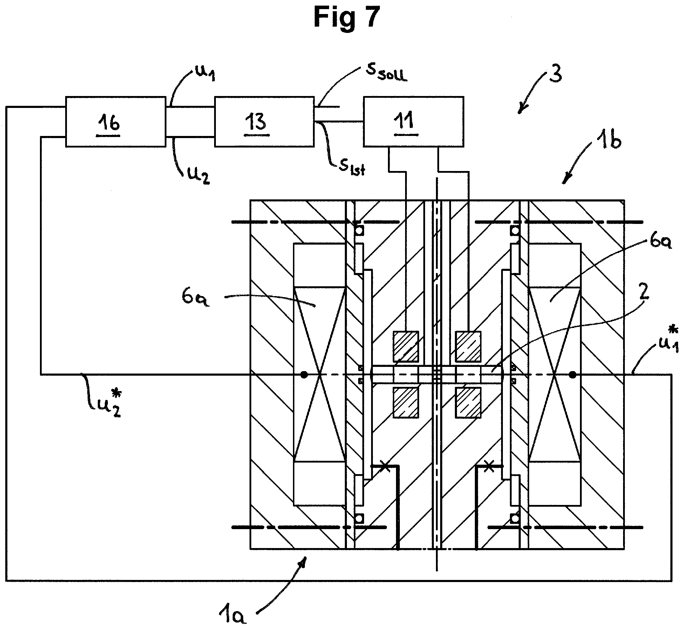

Die Fig 4 zeigt schematisch die Spulen eines Wegmesssystems 11 zur Bestimmung der Ist-Position $S_{Ist}$ des Steuerkolbens 2. Der Steuerkolben 2 ist magnetisch (z.B. aus Stahl mit einem ferritischen Gefüge), weist jedoch auch mind. einen nichtmagnetischen Teil 20 auf. Durch die zwei - eine Differentialdrossel bildenden - Spulen 19a, 19b kann die Position $S_{Ist}$ des Steuerkolbens 2 durch eine hier nicht weiter dargestellte Auswerteelektronik (siehe z.B. Fig 7) für induktive Wegaufnehmer bestimmt werden. Auswerteelektroniken für induktive Wegaufnehmer sind dem Fachmann bekannt, siehe z.B. http://www.lvdt.de.

Die Fig 5 zeigt schematisch eine Steuerung 12 für einen als Piezostack 6a ausgeführten piezoelektrischen Aktuator 6 einer Betätigungseinrichtung 1. Das Steuersignal S - hier einfach Pulse - wird vom Verstärker 16 entsprechend der Signalform verstärkt und das verstärkte Steuersignal S* als Spannungssignal dem Piezostack 6a zugeführt. Der Piezostack 6a dehnt sich in Abhängigkeit des Steuersignals S in axialer Richtung x aus und biegt eine hier nicht dargestellte Metallplatte 5 der Betätigungseinrichtung 1 durch, was zu einer Verschiebung eines Steuerkolbens 2 führt.

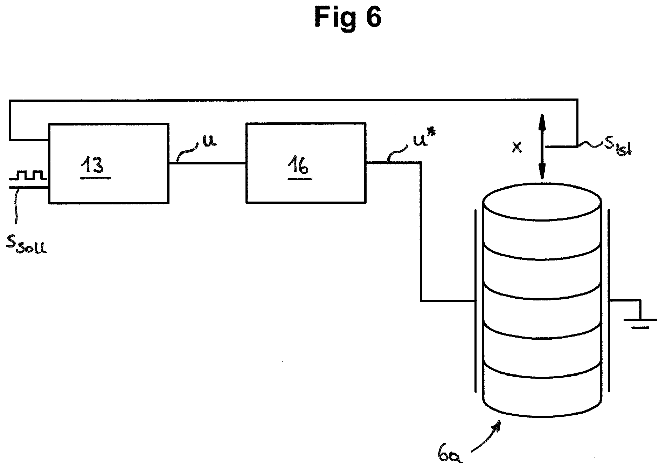

Die Fig 6 zeigt schematisch eine Regelung für einen als Piezostack 6a ausgeführten Piezoaktuator 6 einer Betätigungseinrichtung 1. Das Sollsignal $S_{Soll}$ für die Ausdehnung des Piezoaktuators 6 - hier wieder Pulse - wird einem Regler 13 zugeführt, der in Abhängigkeit der Differenz zwischen der Ist-Ausdehnung $S_{Ist}$ des Piezoaktuators 6 und dem Sollsignal $S_{Soll}$ eine Stellgröße u berechnet. Die Stellgröße u wird vom Verstärker 16 verstärkt und das verstärkte Signal u* als Spannungssignal dem Piezostack 6a zugeführt. Die Fig 6 zeigt somit eine einfach Positionsregelung für die Ausdehnung des Piezoaktuators 6.

Fig 7 zeigt schematisch eine Positionsregelung für die Position eines Steuerkolbens 2 in einem Hydraulikventil 3 mit zwei Betätigungseinrichtungen 1a, 1b. Über die beiden Spulen der Wegmesseinrichtung 11 (Aufbau siehe Fig 4) wird die Position $S_{Ist}$ des Steuerkolbens 2 bestimmt. Die Ist-Position des Steuerkolbens $S_{Ist}$ und dessen Soll-Position $S_{Soll}$ werden einem Regler 13 zugeführt, der in Abhängigkeit der Differenz zwischen $S_{Soll}$ und $S_{Ist}$ zwei Stellgrößen $u_1$, $u_2$ berechnet. Die Stellgrößen werden vom Verstärker 16 verstärkt und die verstärkten Signale $u_1^*$, $u_2^*$ als Spannungssignale den Piezostacks 6a der beiden Betätigungseinrichtungen 1a, 1b zugeführt. Somit gibt die Fig 7 eine einfache Regelung für die Position des Steuerkolbens 2 eines Hydraulikventils 3 mittels zweier Betätigungseinrichtung 1a, 1b an.

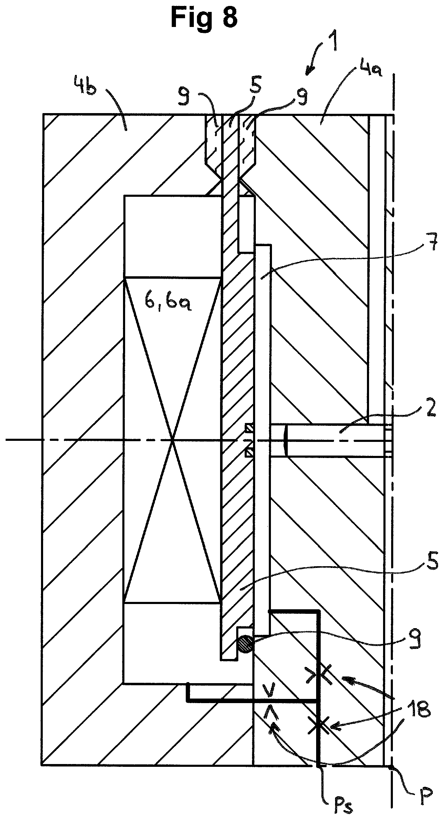

Die Fig 8 zeigt einen Halbschnitt durch zwei Varianten einer Betätigungseinrichtung 1, die jeweils oberhalb und unterhalb der horizontalen Symmetrieachse dargestellt sind. Um die notwendige Kraft für den piezoelektrischen Aktuator 6 zur Durchbiegung der Metallplatte 5 zu reduzieren, ist in beiden Varianten die Metallplatte 5 gelenkig gelagert und der Aktuator "nass" ausgeführt. Die untere Variante der Betätigungseinrichtung 1 ist nicht erfindungsgemäß ausgeführt, da die Metallplatte 5 am Gehäuse 4a, 4b nicht ortsfest festgelegt ist.

Bei der oberen Variante liegt die Metallplatte 5 auf je einer Erhebung im Ventilblock 4a und im Deckel 4b auf und ist über zwei elastische Dichtungen 9 abgedichtet. Außerdem sind der Druckraum 7 und der Raum, in dem sich der piezoelektrische Aktuator 6 bzw. der Piezostack 6a befindet, über mehrere Leitungen mit Blenden bzw. Drosseln 18 mit einem Steuerdruckanschluss $p_S$ verbunden. Somit gleicht sich der statische Druck links und rechts der Metallplatte 5 aus, sodass die Metallplatte 5 entlastet wird. Das Durchbiegen der Metallplatte 5 durch den piezoelektrischen Aktuator 6 bzw. den Piezostack 6a führt wiederum zu einem Druckanstieg im Druckraum 7, welcher den Steuerkolben 2 verschiebt.

Bei der unteren Variante liegt die Metallplatte auf einer steifen Dichtung 9 auf, was ebenfalls einer gelenkigen Lagerung der Metallplatte 5 entspricht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

Bezugszeichenliste

| | |
|---|---|
| 1, 1a, 1b | Betätigungseinrichtung |
| 2 | Steuerkolben |
| 3 | Hydraulikventil |
| 4 | Gehäuse |
| 4a | Ventilblock |
| 4b | Deckel |
| 5 | Metallplatte |
| 6 | piezoelektrischer Aktuator |
| 6a | Piezostack |
| 7, 7' | Druckraum |
| 8 | Haltemagnet |
| 9 | Dichtung |
| 10 | Bombierung |
| 11 | Wegmesssystem |
| 12 | Steuerung |
| 13 | Regler |
| 14 | Feder |
| 15 | Schraubenverbindung |
| 16 | Verstärker |
| 18 | Blende |
| 19a, 19b | Spule |
| 20 | Nicht magnetischer Teil des Steuerkolbens |
| A | Verbraucheranschluss A des Hydraulikventils |
| B | Verbraucheranschluss B des Hydraulikventils |
| p | Druckanschluss p des Hydraulikventils |
| $p_S$ | Steuerdruckanschluss des Hydraulikventils |
| r | Radius |
| $r_K$ | Radius des Steuerkolbens |
| $r_P$ | Radius der Metallplatte über dem Druckraum |
| S | Steuersignal |
| S* | verstärktes Steuersignal |
| $S_{Ist}$ | Ist-Position |
| $S_{Soll}$ | Soll-Position |
| u, $u_1$, $u_2$ | Stellgröße |
| u*, $u_1^*$, $u_2^*$ | verstärktes Stellgrößensignal |
| x | axiale Richtung |

**Patentansprüche**

1. Hydraulikventil (3) mit einer Betätigungseinrichtung (1, 1a, 1b) für einen Steuerkolben (2), wobei das Hydraulikventil (3)

   - ein Gehäuse (4);
   - den Steuerkolben (2) mit einer Querschnittsfläche $A_K$, wobei der Steuerkolben (2) im Gehäuse (4) in axialer Richtung verschiebbar ist und durch das Verschieben des Steuerkolbens (2) ein Durchfluss einer Druckflüssigkeit einstellbar ist; und
   - zumindest eine Betätigungseinrichtung (1, 1a, 1b) zum Verschieben des Steuerkolbens

   umfasst, wobei die Betätigungseinrichtung einen piezoelektrischen Aktuator (6) und einen im Betrieb mit der Druckflüssigkeit gefüllten Druckraum (7) aufweist,

**dadurch gekennzeichnet, dass** die Betätigungseinrichtung eine biegesteife Metallplatte (5) aufweist, wobei ein äußerer Bereich der Metallplatte (5) am Gehäuse (4) ortsfest festgelegt ist und der piezoelektrische Aktuator (6) einen zentralen Bereich der Metallplatte (5) durchbiegen kann; und wobei

    ◦ der Druckraum (7) von dem Gehäuse (4), der Metallplatte (5) und dem Steuerkolben (2) begrenzt wird,
    ◦ die Metallplatte (5) den Druckraum (7) abdichtet und der Druckraum (7) den Steuerkolben (2) beaufschlagt, und
    ◦ eine Fläche $A_P$ der Metallplatte (5) über dem Druckraum (7) größer ist als die Querschnittsfläche $A_K$ des Steuerkolbens (2);

wobei das Hydraulikventil (3) zwei Betätigungseinrichtungen (1a, 1b) aufweist, sodass die beiden Enden des Steuerkolbens (2) jeweils von einer Betätigungseinrichtung (1a, 1b) betätigt werden.

2. Hydraulikventil (3) nach Anspruch 1, **dadurch gekennzeichnet, dass** die Fläche $A_P$ der Metallplatte (5) über dem Druckraum (7) mindestens 4-mal, mindestens 16-mal, mindestens 36-mal, oder mindestens 64-mal größer als die Querschnittsfläche $A_K$ des Steuerkolbens (2) ist.

3. Hydraulikventil (3) nach einem der vorhergehenden Ansprüche, **dadurch gekennzeichnet, dass** der piezoelektrische Aktuator (6) ein Wegmesssystem zur Messung einer Ausdehnung des piezoelektrischen Aktuators (6) in axialer Richtung x aufweist.

4. Hydraulikventil (3) nach einem der vorhergehenden Ansprüche, **dadurch gekennzeichnet, dass** ein zentraler Bereich der Metallplatte (5) dicker ist als ein äußerer Bereich.

5. Hydraulikventil (3) nach einem der vorhergehenden Ansprüche, **dadurch gekennzeichnet, dass** die Metallplatte (5) aus Stahl, vorzugsweise Federstahl, besteht.

6. Hydraulikventil (3) nach einem der vorhergehenden Ansprüche, **dadurch gekennzeichnet, dass** die Metallplatte (5) rund, vorzugsweise kreisrund, ist.

7. Hydraulikventil (3) nach einem der vorhergehenden Ansprüche, **dadurch gekennzeichnet, dass** der zentrale Bereich der Metallplatte (5) einen Haltemagneten aufweist.

8. Hydraulikventil (3) nach einem der vorhergehenden Ansprüche, **dadurch gekennzeichnet, dass** eine fluiddichte Dichtung (9) zwischen dem äußeren Bereich der Metallplatte (5) und dem Gehäuse (4, 4a) vorhanden ist.

9. Hydraulikventil (3) nach einem der vorhergehenden Ansprüche, **dadurch gekennzeichnet, dass** der Druckraum (7) von einer Leitung, die vorzugsweise eine Blende aufweist, mit der Druckflüssigkeit unter Druck (p, pS) versorgt wird.

10. Hydraulikventil (3) nach einem der vorhergehenden Ansprüche, **dadurch gekennzeichnet, dass** der Steuerkolben (2) aus Stahl, vorzugsweise aus ferromagnetischem Stahl, besteht.

11. Hydraulikventil (3) nach einem der vorhergehenden Ansprüche, **dadurch gekennzeichnet, dass** die Stirnfläche des Steuerkolbens (2) eine Bombierung aufweist.

12. Hydraulikventil (3) nach einem der vorhergehenden Ansprüche, **dadurch gekennzeichnet, dass** das Gehäuse (4) einen Ventilblock (4a) und einen Deckel (4b) aufweist, wobei der Deckel (4b) lösbar mit dem Ventilblock (4a) verbunden ist und sich der piezoelektrische Aktuator (6) am Deckel (4b) abstützt.

13. Hydraulikventil nach Anspruch 12, **dadurch gekennzeichnet, dass** der Ventilblock (4a) ein, vorzugsweise berührungsloses, Wegmesssystem zur Messung einer Position des Steuerkolbens (2) aufweist.

14. Hydraulikventil nach einem der vorhergehenden Ansprüche 12 bis 13, **dadurch gekennzeichnet, dass** ein Verstärker (16) ein Steuersignal (S) verstärkt und den piezoelektrischen Aktuator (6) mit dem verstärkten Steuersignal (S*) bestromt.

15. Hydraulikventil nach Anspruch 14 mit einem Regler (13) und einem Verstärker (16), **dadurch gekennzeichnet, dass** der Regler (13) ein Stellgrößensignal u in Abhängigkeit einer Differenz zwischen einer Soll-Position und einer Ist-Position des Steuerkolbens berechnet, und der Verstärker (16) zumindest einen piezoelektrischen Aktuator (6) mit dem verstärkten Stellgrößensignal bestromt.

**Claims**

1. Hydraulic valve (3) having an actuating device (1, 1a, 1b) for a control piston (2), wherein the hydraulic valve (3) comprises

    - a housing (4);
    - the control piston (2), with a cross-sectional area $A_K$, wherein the control piston (2) is able to be displaced in the housing (4) in the axial direction, and a throughflow of a pressurized liquid is able to be set by way of the displacement of the control piston (2); and
- at least one actuating device (1, 1a, 1b) for displacing the control piston,

wherein the actuating device has a piezoelectric actuator (6) and a pressure chamber (7) which is filled with the pressurized liquid during operation, **characterized in that** the actuating device has a flexurally rigid metal plate (5), wherein an outer region of the metal plate (5) is fixed to the housing (4) in a stationary manner, and the piezoelectric actuator (6) is able to bend a central region of the metal plate (5); and wherein

  o the pressure chamber (7) is delimited by the housing (4), the metal plate (5) and the control piston (2),
  o the metal plate (5) seals off the pressure chamber (7) and the pressure chamber (7) acts on the control piston (2), and
  o an area $A_P$ of the metal plate (5) over the pressure chamber (7) is greater than the cross-sectional area $A_K$ of the control piston (2);

wherein the hydraulic valve (3) has two actuating devices (1a, 1b), such that the two ends of the control piston (2) are each actuated by one actuating device (1a, 1b).

2. Hydraulic valve (3) according to Claim 1, **characterized in that** the area $A_P$ of the metal plate (5) over the pressure chamber (7) is at least 4 times, at least 16 times, at least 36 times or at least 64 times greater than the cross-sectional area $A_K$ of the control piston (2).

3. Hydraulic valve (3) according to either of the preceding claims, **characterized in that** the piezoelectric actuator (6) has a travel measurement system for measuring an expansion of the piezoelectric actuator (6) in the axial direction x.

4. Hydraulic valve (3) according to one of the preceding claims, **characterized in that** a central region of the metal plate (5) is thicker than an outer region.

5. Hydraulic valve (3) according to one of the preceding claims, **characterized in that** the metal plate (5) consists of steel, preferably spring steel.

6. Hydraulic valve (3) according to one of the preceding claims, **characterized in that** the metal plate (5) is round, preferably circular.

7. Hydraulic valve (3) according to one of the preceding claims, **characterized in that** the central region of the metal plate (5) has a holding magnet.

8. Hydraulic valve (3) according to one of the preceding claims, **characterized in that** a fluid-tight seal (9) is provided between the outer region of the metal plate (5) and the housing (4, 4a).

9. Hydraulic valve (3) according to one of the preceding claims, **characterized in that** the pressure chamber (7) is supplied with the pressurized liquid under pressure (p, pS) by a line, which preferably has an orifice.

10. Hydraulic valve (3) according to one of the preceding claims, **characterized in that** the control piston (2) consists of steel, preferably of ferromagnetic steel.

11. Hydraulic valve (3) according to one of the preceding claims, **characterized in that** the end face of the control piston (2) has a crowned formation.

12. Hydraulic valve according to one of the preceding claims, **characterized in that** the housing (4) has a valve block (4a) and a cover (4b), wherein the cover (4b) is detachably connected to the valve block (4a) and the piezoelectric actuator (6) is supported against the cover (4b).

13. Hydraulic valve (3) according to Claim 12, **characterized in that** the valve block (4a) has a, preferably contactless, travel measurement system for measuring a position of the control piston (2).

14. Hydraulic valve according to either of the preceding Claims 12 and 13, **characterized in that** an amplifier (16) amplifies a control signal (S) and electrically energizes the piezoelectric actuator (6) by way of the amplified control signal (S*).

15. Hydraulic valve according to Claim 14, with a regulator (13) and an amplifier (16), **characterized in that** the regulator (13) calculates a manipulated variable signal u in dependence on a difference between a target position and an actual position of the control piston, and the amplifier (16) electrically energizes at least one piezoelectric actuator (6) by way of the amplified manipulated variable signal.

**Revendications**

1. Soupape hydraulique (3) comprenant un dispositif d'actionnement (1, 1a, 1b) pour un piston de commande (2), dans laquelle la soupape hydraulique (3) comprend

  - un logement (4) ;
  - le piston de commande (2) avec une aire transversale $A_K$, le piston de commande (2) étant mobile dans le sens axial dans le logement (4) et un débit d'un fluide hydraulique peut être réglé par le déplacement du piston de commande (2) ; et

- au moins un dispositif d'actionnement (1, 1a, 1b) pour déplacer le piston de commande,

le dispositif d'actionnement présentant une commande piézoélectrique (6) et un espace sous pression (7) rempli du fluide hydraulique, **caractérisée en ce que** le dispositif d'actionnement présente une plaque métallique (5) résistante à la flexion, une zone extérieure de la plaque métallique (5) étant fixée de manière fixe sur le logement (4) et la commande piézoélectrique (6) pouvant fléchir une partie centrale de la plaque métallique (5) ; et dans lequel

• l'espace sous pression (7) est délimité par le logement (4), la plaque métallique (5) et le piston de commande (2),
• la plaque métallique (5) étanchéifie l'espace sous pression (7) et l'espace sous pression (7) alimente le piston de commande (2), et
• une aire $A_P$ de la plaque métallique (5) au-dessus de l'espace sous pression (7) est supérieure à l'aire transversale $A_K$ du piston de commande (2) ;

dans laquelle la soupape hydraulique (3) présente deux dispositifs d'actionnement (1a, 1b), de sorte que les deux extrémités du piston de commande (2) sont actionnées respectivement par un dispositif d'actionnement (1a, 1b).

2. Soupape hydraulique (3) selon la revendication 1, **caractérisée en ce que** l'aire $A_P$ de la plaque métallique (5) au-dessus de l'espace sous pression (7) est au moins 4 fois, au moins 16 fois, au moins 36 fois ou au moins 64 fois supérieure à l'aire transversale $A_K$ du piston de commande (2).

3. Soupape hydraulique (3) selon l'une des revendications précédentes, **caractérisée en ce que** la commande piézoélectrique (6) présente un système de mesure de déplacement pour mesurer un allongement de la commande piézoélectrique (6) dans le sens axial x.

4. Soupape hydraulique (3) selon l'une des revendications précédentes, **caractérisée en ce qu'**une partie centrale de la plaque métallique (5) est plus épaisse qu'une partie extérieure.

5. Soupape hydraulique (3) selon l'une des revendications précédentes, **caractérisée en ce que** la plaque métallique (5) est en acier, de préférence en acier à ressort.

6. Soupape hydraulique (3) selon l'une des revendications précédentes, **caractérisée en ce que** la plaque métallique (5) est ronde, de préférence circulaire.

7. Soupape hydraulique (3) selon l'une des revendications précédentes, **caractérisée en ce que** la partie centrale de la plaque métallique (5) présente un aimant de maintien.

8. Soupape hydraulique (3) selon l'une des revendications précédentes, **caractérisée en ce qu'**un joint étanche aux fluides (9) est présent entre la partie extérieure de la plaque métallique (5) et le logement (4, 4a).

9. Soupape hydraulique (3) selon l'une des revendications précédentes, **caractérisée en ce que** l'espace sous pression (7) est alimenté avec le fluide hydraulique sous pression (p, ps) par une conduite qui présente de préférence un volet.

10. Soupape hydraulique (3) selon l'une des revendications précédentes, **caractérisée en ce que** le piston de commande (2) est en acier, de préférence en acier ferromagnétique.

11. Soupape hydraulique (3) selon l'une des revendications précédentes, **caractérisée en ce que** la face avant du piston de commande (2) présente un bombement.

12. Soupape hydraulique (3) selon l'une des revendications précédentes, **caractérisée en ce que** le logement (4) présente un bloc de soupape (4a) et un couvercle (4b), dans laquelle le couvercle (4b) est relié de manière séparable au bloc de soupape (4a) et la commande piézoélectrique (6) s'appuie sur le couvercle (4b).

13. Soupape hydraulique selon la revendication 12, **caractérisée en ce que** le bloc de soupape (4a) présente un système de mesure de déplacement, de préférence sans contact, pour mesurer une position du piston de commande (2).

14. Soupape hydraulique selon l'une des revendications précédentes 12 à 13, **caractérisée en ce qu'**un amplificateur (16) amplifie un signal de commande (S) et alimente la commande piézoélectrique (6) avec le signal de commande (S*) amplifié.

15. Soupape hydraulique selon la revendication 14, comprenant un régulateur (13) et un amplificateur (16), **caractérisée en ce que** le régulateur (13) calcule un signal de grandeur de réglage u en fonction d'une différence entre une position de consigne et une position réelle du piston de commande, et l'amplificateur (16) alimente au moins une commande piézoélectrique (6) avec le signal de grandeur de réglage amplifié.

# Fig 1

# Fig 2

## Fig 2a

## Fig 2b

# Fig 3

# Fig 4

# Fig 5

# Fig 6

# Fig 7

# Fig 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9958840 A1
- DE 4407962 C1
- US 6062532 A
- DE 8801009 U1
- WO 9958840 A

**In der Beschreibung aufgeführte Nicht-Patentliteratur**

- **ALAN HITCHCOX.** Piezo actuators: The future of servovalves?. *hydraulics & pneumatics,* 2005
- **JÖRG EDLER et al.** Investigation of a Servo Valve with a Piezoelectric Pilot Stage. *Fluid Power,* 2015
- **HERAKOVIC N.** PIEZOAKTORBETATIGUNG FÜR EIN EINSTUFIGES HOCHDYNAMISCHES SERVOVENTIL. *O&P - OELHYDRAULIK UND PNEUMATIK,* 01. August 1995, vol. 39 (8), 601-605